# EUROPEAN PATENT APPLICATION

(11) **EP 4 321 306 A1**
(43) Date of publication of application: **14.02.2024**
(21) Application number: 22189813.3
(22) Date of filing: 11.08.2022
(51) Int. Cl.: B25J 9/08, B25J 9/16

(54) **A SAFE CONFIGURATION OF A MODULAR INDUSTRIAL ROBOT**

(71) Applicant: Robco GmbH, 80807 München (DE)
(72) Inventor: Sausmikat, Michael, 85356 Freising (DE); Maroldt, Paul, 80809 München (DE)
(74) Representative: Banzhaf, Felicita

(57) **Abstract**

The invention relates to a method (100) for a configuration of a modular industrial robot (10), the method (100) comprising:
obtaining (101) a module specification about a current structure of the robot (10), the module specification being specific for a number of modules (20) of the robot (10);
configuring (102) identifiers for the modules (20) using the module specification, the identifiers being used for addressing the modules (20) via a industrial communication network (30);
triggering (103) responses of the modules (20) depending on the configured identifiers;
receiving (104) each of the responses via an additional communication network (40);
identifying (105) each of the modules (20) from which the responses originate, a module identity of a respective identified module (20) being assigned to the response originating from it; and
verifying (106) the configured identifiers using the module identities.

## Description

### TECHNICAL FIELD

The present invention generally concerns the field of modular industrial robots, and in particular the configuration of an industrial communication network used for industrial robots.

### BACKGROUND

Industrial communication networks, such as fieldbusses, are typically used for transmitting data between parts of industrial robots. Usually, the layout and configuration of an industrial robot is determined once for the robot's particular task and then the robot is constructed accordingly. Therefore, a static setup of the network is the means of choice. However, if a more modular setup for a modular industrial robot it desired, there are several challenges to ensure a safe communication connection between the modules.

Common procedures to configure industrial robots are often either statical or require a manual intervention, if a sufficient safety level should be achieved.

It is therefore a problem underlying the invention to ensure the safety and/or automatability of the configuration of a modular industrial robot and thereby overcome the above-mentioned disadvantages of the prior art at least in part.

### SUMMARY OF INVENTION

According to one aspect of the invention, a method, particularly computer-implemented method, for a configuration of a modular industrial robot is provided. The modular industrial robot can be modular in the sense that it can be composed of different modules depending on the desired application. A structure of the robot, particularly the amount and/or order of modules, is therefore variable. The order of the modules may describe the sequence in which the modules are connected to each other, wherein an endpoint like an endeffector is usually the last module in this order. Further modules of the robot may comprise a drive unit and/or a link module, wherein the modules may be physically connected via clamps. Each of the modules may further comprise at least one electronic device like at least one slave device that are connected to provide at least one communication network. The steps of the method described below may advantageously be carried out fully automatically without manual intervention.

The method may comprise obtaining a module specification about a current structure of the robot. The module specification may be specific for a number and/or order and/or type of modules of the robot. Furthermore, the module specification may be obtained dynamically and repeatedly to take into account the case that the number and/or order and/or type of modules changes.

The method may further comprise configuring identifiers like fieldbus addresses, particularly Fail Safe over EtherCAT (short: FSOE) addresses, for the modules using the module specification. The identifiers may be used for addressing the modules via an industrial communication network like FSOE. For example, for assigning an identifier to each module, the modules are first identified using the module specification. The method may further comprise a triggering of responses of the modules depending on the configured identifiers and particularly using the addressing of the modules via the industrial communication network or using an addressing with addresses that are linked to the configured identifiers. The triggering may be performed after each assignment of an identifier to a module. Furthermore, a receiving of each of the responses via an additional communication network may be performed. This allows identifying each of the modules from which the responses originate, wherein a module identity of a respective identified module is assigned to the response originating from it. Finally, a verifying of the configured identifiers using the module identities can be performed. This allows to verify that each identifier was set on the right module. Furthermore, the solution according to the invention may allow the robot to be standard-compliant, e.g. redundantly constructed according to a certification like Safety integrity level (SIL) 3.

A fieldbus may be used as the industrial communication network for the communication with the modules. For example, the fieldbus may be configured as or based on EtherCAT (Ethernet for Control Automation Technology). EtherCAT is an Ethernet-based fieldbus system that is standardized in IEC 61158 and is suitable for both hard and soft real-time computing requirements in automation technology. EtherCAT may also be used in conjunction with additional protocols. For example, it is possible to increase the safety level by using Functional Safety with FSOE. FSOE is a safety-protocol that meet the requirements of the Safety Integrity Level 3 according to IEC 61508. EtherCAT provides a single-channel communication system for transferring safe and non-safe information. With FSOE, functional safety with EtherCAT can be realized. Another protocol that can be used in conjunction with EtherCAT is File Access over EtherCAT (FoE) and enables access to arbitrary data structures. While the industrial communication network may be configured as EtherCAT or FSOE, the additional communication network may be configured differently to this.

It is possible that the industrial communication network is an extended industrial communication network in the sense that it provides additional features like security features. An example of such an industrial communication network is the previously described FSOE. Accordingly, additional to the extended industrial communication network also a basic industrial communication network may be provided like EtherCAT. It should be clear that the basic industrial communication network may be linked to the extended industrial communication network since the extended industrial communication network may use functions and/or structure of the basic industrial communication network. Accordingly, the addresses used for the addressing of the extended industrial communication network may be linked to the addresses used for the addressing of the basic industrial communication network. For example, each module is assigned both type of addresses, wherein the two addresses of this module may be linked accordingly. This allows to perform the triggering depending on the configured identifiers via the extended industrial communication network but alternatively also via the basic industrial communication network. In other words, according to the step of triggering the responses of the modules, depending on the configured identifiers can mean that the addressing of the modules via the (extended) industrial communication network is used to trigger the responses, or it can mean that the addressing of the modules via the basic industrial communication network is used to trigger the responses, since the addresses of the basic industrial communication network are depending and/or linked to the addresses of the extended industrial communication network. Or more specifically: the configured identifiers may be addresses for FSOE, whereas the triggering is performed using EtherCAT (and not FSOE) and thereby using the addresses for EtherCAT (and not the configured identifiers, which can be the addresses for FSOE). Since the addresses for EtherCAT are linked to the addresses of FSOE, the module identity of the module that outputs one of the responses is still specific for the identifier that has been configured for this module.

In one aspect of the invention, the step of configuring is carried out by at least one first master, the first master may be used for controlling a communication with the modules via the industrial communication network using the configured identifiers for the addressing. According to a further aspect of the invention, the step of obtaining the module specification may comprise: determining the module specification by a second master using an identification procedure to identify the currently present modules of the robot via the additional communication network. The second master may be used for controlling a communication with the modules via the additional communication network. The step of obtaining the module specification may further comprise transmitting the determined module specification to the first master via a data connection between the first master and the second master. This allows the second master to dynamically provide the module specification, thereby taking into account the case that the number and/or order and/or type of modules changes.

It is possible that the steps of receiving and identifying and preferably verifying may be carried out by the second master and preferably the step of triggering may be carried out by the first master or another master. Furthermore, the step of triggering may comprise a storing of an identity of each of the modules for which the response was triggered. Additionally, the step of verifying comprises determining the module identity of each of the identified modules by the second master, each module identity may be assigned to the response originating from it. Finally, a comparison may be carried out, wherein the determined module identity is compared with the stored identity for each of the responses. The comparison allows to securely verify the correct assignment of the identifiers to the modules.

According to another aspect, the identifiers may be configured in a way that the identifiers are uniquely assigned to the modules, the uniquely assigned identifiers may be used to send commands and/or data to and/or from the modules via the industrial communication network, particularly via a fieldbus, preferably EtherCAT and/or FSOE-EtherCAT. This allows to securely control the robot, for example, by moving the robot using commands. Particularly, the Fieldbus can be selected from a family of known industrial computer networks used for real-time distributed control. Such fieldbus profiles are standardized by the International Electrotechnical Commission (IEC) as IEC 1784/61158.

In the context of the invention, the step of triggering may comprise initiating an activation of a GPIO (General Purpose Input/Output) of one of the modules by transmitting a corresponding message to the module, particularly via the or another industrial communication network. Each module may comprise a first slave for the respective industrial communication network and a second slave for the additional communication network. The first slave may comprise the GPIO that, when it is output, is interpreted by the second slave in a way that the response is output by the second slave via the additional communication network. The response may be regarded as a message in the additional communication network, at which the second master can inform the at least one first master (EtherCAT-Master or FSOE-Master) that everything is set up properly.

Optionally, the step of configuring the identifiers comprises setting the identifiers for the modules by providing a file for the modules, particularly via File over EtherCAT, the file may be modified for each of the modules to include the identifier. After each modification, the provided file may be saved to the respective module and the correctness of each of the saved files may be verified by reading back the file and comparing the read back file with the originally provided file. In other words, the file may be read back and counter checked with the originally pre-stored file. This has the advantage that it can be ensured that the file was saved properly on each device.

According to another aspect, after the triggering of the response of one of the modules the response is first received, then the identification of the module from which the response originates is carried out, and then the configured identifier used for the triggering of this response is verified based on the identification of the module. This may be carried out before the response of another one of the modules is triggered. In this manner, an easy assignment of each triggering to the receiving of the response is possible to ensure that the response actually comes from the triggered module.

Furthermore, the module specification may be specific for the type of each of the modules of the robot, wherein the method further comprises selecting a part (i.e. a subset) of the modules depending on the type of each of the modules, particularly those modules that comprise a motor and/or a sensor and/or an endeffector. It is possible that the response is only triggered for the selected modules. This limitation on the selected modules can be particularly useful if only a particular type of module is connected by the industrial communication network. However, the additional communication network may be used to connect every module of the robot without limiting the connection on specific types.

The module specification may be specific for the order of the modules of the robot, wherein position data from each motor can be transmitted via the industrial communication network, preferably a fieldbus, particularly via FSOE-EtherCAT, wherein a position of the robot may be determined using the position data and the module specification. Via the additional communication network as a "second channel", the first master is able to know the module order and the type of module using the module specification, which allows it to map it to a pre-stored kinematic database. Therefore, the solution according to the invention can provide safe data for the kinematic calculation for moving the robot.

According to another aspect of the invention, a method for determining an amount and order of modules of a modular industrial robot is provided. The method may comprise transmitting a discovery message by a master device via a communication network, particularly the previously described additional communication network, to discover a first module of the modules, wherein the discovered first module may respond to the discovery message. Furthermore, incrementing a number and setting an address of the discovered first module depending on (i.e. particular, upon receipt of) the response to the discovery message (particularly by the master device) may be provided, wherein the set address may be used for addressing the discovered module via the communication network. The address may further be specific for the order of the modules and the number may be specific for the amount of the modules. The method may further comprise transmitting at least one further discovery message by the master device via the communication network to discover at least one further module of the modules, wherein each of the discovered at least one further modules may respond to the discovery message. Additionally, incrementing the number and setting at least one further address of the discovered at least one further module depending on (i.e. particular, upon receipt of) each response to the discovery message (particularly by the master device) may be provided. The method thereby provides an identification procedure to securely identify the currently present modules of the robot.

Furthermore, the discovery message may be processed and forwarded by the already discovered modules to at least one of the further modules, particularly to reach finally a non-discovered module. Furthermore, each response to the discovery message may comprise a type identification about the type of the corresponding responding module.

Additionally, the method for determining an amount and order of modules may comprise carrying out the steps of a method for a configuration of a modular industrial robot according to the invention, wherein the number and/or addresses may be used as the module specification.

According to another aspect of the invention, a master device may be provided that comprises means for determining an amount and order of modules of a modular industrial robot by transmitting a discovery message via a communication network to discover a first module of the modules, and incrementing a number and setting an address of the discovered first module depending on the response to the discovery message, particularly upon receipt of the discovery message by the master device. The address may be used for addressing the discovered module via the communication network. The address may further be specific for the order of the modules, and the number may be specific for the amount of the modules. Furthermore, the means of the master device may be configured for transmitting at least one further discovery message via the communication network to discover at least one further module of the modules, and incrementing the number and setting at least one further address of the discovered at least one further module depending on each response to the discovery message, particularly upon receipt of the discovery message by the master device. Each of the discovered at least one further modules may therefore also respond to the discovery message, which allows to discover the modules securely of the robot piece by piece.

Also provided is a slave device for a module of a modular industrial robot, comprising means for responding to a discovery message from a master device by receiving and responding to the discovery message via a communication network for being discovered by the master device, and receiving and forwarding the discovery message to a following slave device via the communication network if already been discovered by the master device.

Some or each of the modules may comprise the slave device according to the invention, particularly in the form of an integrated circuit (short: IC) or Field Programmable Gate Array (short: FPGA). Each slave device may comprise an identifier (short: ID) used for addressing the slave device via the industrial communication network. Additionally, each module may comprise a type ID that describes the type of the module. A robot may be constructed from different types of modules, depending on the application of the robot. Consequently, the combination of type IDs may describe the model of robot. The type may be selected from the following: drive module, endeffector, link module, active module, static module, sensor module, or the like. The construction of the robot may be detected by querying the type IDs of the modules using the industrial communication network. However, in order to fulfill higher safety requirements, the usage of a single industrial communication network may not be sufficient. It is therefore desired to provide a safe module detection, preferably without any manual interventions. First, it is possible to increase the safety level by using FSOE. FSOE may be used, particularly only, for those modules that comprise an actuator like motor (hereinafter also referred to as drive module) and/or another active element like a sensor. A communication with other modules like link modules (without actuator) may be carried out using the additional communication network like a proprietary bus. The communication via the additional communication network may be used to detect the correct number and correct amount of modules of the robot. Furthermore, the additional communication networks creates redundancy as a second channel that is used parallel to the industrial communication network.

The additional communication network may be configured to be build up piece by piece when modules are combined for the robot. However, by adding an additional unknown number of modules to the robot, the correct configuration of the communication networks must be carefully checked. Since two communication networks are provided, namely the industrial communication network and the additional communication network, this allows for mutual control of the configuration. In other words, one of the communication networks may be used to check the configuration of the other.

Also provided is a safety control system for a modular industrial robot, wherein the system comprises a first master for controlling a communication with at least two modules of the robot via a industrial communication network, and a second master for controlling a communication with the modules of the robot via an additional communication network. The first master may be configured to address the modules via the industrial communication network using identifiers of the modules. The second master may be configured to receive responses via the additional communication network, the responses may be triggered previously depending on the identifiers. Furthermore, the second master may further be configured to perform an identification of each of the modules from which the respective response originates, wherein the first master and the second master may be in data connection with each other for carrying out a verification of the identifiers using the identification. The industrial communication network may further be configured as EtherCAT. Additionally, the safety control system may be configured to carry out a method for a configuration of a modular industrial robot according to the invention and/or comprises a master device according to the invention and/or comprises a slave device according to the invention.

Also provided is a modular industrial robot for manufacturing, comprising the safety control system according to the invention, wherein the modular robot may be used for an industrial application, the industrial application comprise at least one of the following: transportation, assembling, processing, welding, finishing, machine tending of materials and parts.

Also provided is a data processing apparatus comprising means for carrying out the method according to the invention. Furthermore, a computer program may be provided comprising instructions which, when the program is executed by a computer, cause the computer to carry out a method according to the invention. The data processing apparatus may comprise a data storage that comprise the computer program according to the invention and a processor for reading the computer program from the storage and carrying out the computer program.

### BRIEF DESCRIPTION OF THE DRAWINGS

The disclosure may be better understood by reference to the following drawings:
- Fig. 1:: A flow chart illustrating a method for determining an amount and order of modules of a modular industrial robot along with a master device and slave device in accordance with embodiments of the invention.
- Fig. 2:: A flow chart illustrating a method for a configuration of a modular industrial robot in connection with a block diagram of a system in accordance with embodiments of the invention.
- Fig. 3-4:: Flow charts further illustrating a method in accordance with embodiments of the invention.
- Fig. 5:: A block diagram further illustrating a system in accordance with embodiments of the invention.
- Fig. 6-13:: Practical implementations of certain concepts disclosed herein in accordance with embodiments of the invention

### DESCRIPTION OF EMBODIMENTS

Embodiments of the invention provide techniques to ensure the safety and/or automatability of the configuration of a modular industrial robot 10. The modular industrial robot 10 can be regarded as a system that comprises two main parts: the robotic part and a control unit. The robotic part may comprise the modules and/or an endeffector and/or a base unit. The control unit may comprise the safety control system according to the invention. A part of the modules may be configured as drive modules, which comprise a motor for providing a movement of the robot 10. Another part of the modules may be configured as link modules. A computer may send data via Ethernet to the control unit, where the data is processed along with the signals sent by external safety devices connected to one or several I/O blocks of the control unit to provide a control of the modules. Furthermore, the drive modules may be configured to execute rotational movement depending on the control of the control unit. The link modules may be used to physically connect the parts of the robot 10 to extend its workspace and reach the desired configuration.

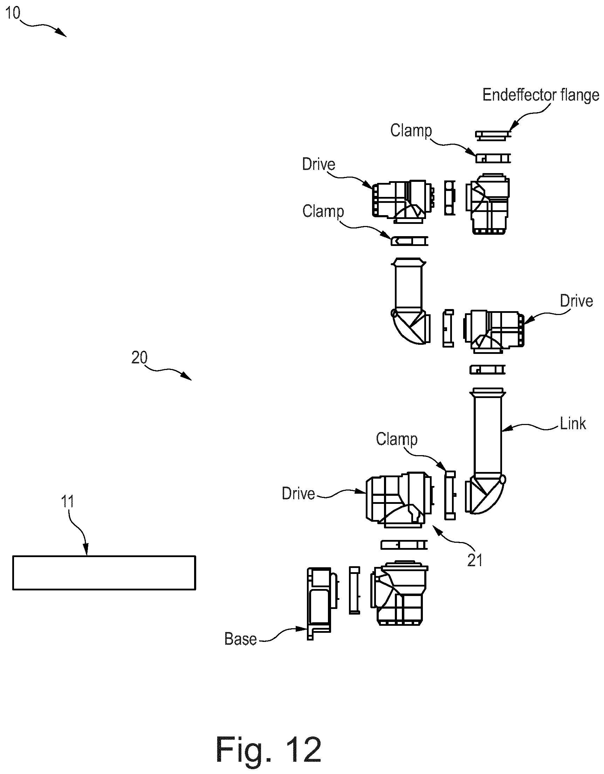

The robot 10 may comprise multiple modules. An example of the construction of the robot 10 is shown in Fig. 12. There, the modular robot 10 is shown as a system that includes, or consists of, two main parts: the robot part (modules + end effector/tool + base) and the control unit 11. The system can exemplary work as follows: The PC/tablet sends data via Ethernet to the control unit, where the data is processed together with the signals coming from external (safety) devices (connected to one or more I/O blocks). The drive modules perform the rotational movement, while the link the link modules connect the parts of the robot 10 to extend its working range and achieve the desired configuration. This way, the modular robot 10 applications cover a very wide range of industrial applications such as transportation of materials and parts, welding, assembling, machine tending, and many more.

A communication of a control with the modules can be provided by at least one communication network, as described in more detail in the following. Since the amount and order of the modules of the robot can vary, the at least one communication network can initially be configured to detect the actual construction of the robot. In other words, an amount and order of the modules 20 of the robot 10 needs to be determined.

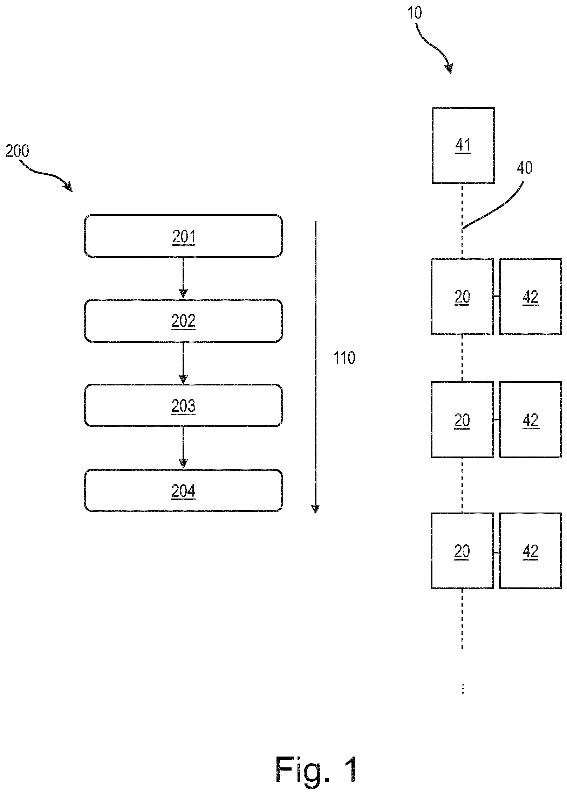

Fig. 1 shows a flowchart of a method 200 for determining 110 an amount and order of modules 20 of a modular industrial robot 10 in accordance with embodiments of the invention. In a first step 201, a transmitting of a discovery message is carried out by a master device 41 via a communication network 40 to discover a first module 20 of the modules 20. Afterwards, the discovered first module 20 may respond to the discovery message. The response may include a transmitting of a response message from the first module 20 back to the master device 41. As a reaction to this, incrementing a number and setting an address of the discovered first module 20 may be performed according to a next step 202. This step 202 may therefore be performed depending on the response to the discovery message, for example, only if the response is received and/or verified to be correct. The address may be used for addressing the discovered module 20 via the communication network 40 in a later operation of the robot. The address may further be specific for the order of the modules 20. To this end, ascending addresses may be used and may therefore be related to an ascending order of the modules 20 with regards to the sequence of connection of the modules 20. The number may be specific for the amount of the modules 20, for example, representing directly the number of modules 20. The method 200 may further comprise, as a next step 203, transmitting at least one further discovery message by the master device 41 via the communication network 40 to discover at least one further module 20 of the modules 20, wherein each of the discovered at least one further modules 20 may also respond to the discovery message. In accordance with step 202, a further step 204 is also provided as a reaction to the response, comprising again an incrementing of the number and setting at least one further address of the discovered at least one further module 20 depending on each response to the discovery message. Steps 203 and 204 may then be repeated for every further module 20 of the robot 10, for example, until no response is received anymore or a response from an endpoint 22 is received. The method 200 thereby provides an identification procedure to securely identify the currently present modules 20 of the robot 10.

It may also be provided that the discovery message is processed and forwarded by the already discovered modules 20 to at least one of the further (non-discovered) modules 20. This allows to identify the modules 20 of the robot 20 piece by piece. The discovery message is then not simply tunneled but first processed by the respective module 20. The processing may include detection of whether the discovery message addresses the particular module 20 or to another module 20, with only the latter resulting in forwarding the message. To this end, the discovery message may comprise a data field representing the target address of the module 20. Furthermore, each response to the discovery message may comprise a type identifier about the type of the corresponding responding module 20. The type identifier may be assigned to the address of the module 20 by the master device 41. Also, the type identifier (or short type ID) can be pre-set by the manufacturer and/or integrated in a computer program of each module 20, particularly a slave device 42 of the module 20. After the response has been transmitted from the module 20 to the master device 41, the master device 41 may send back the received response, particularly altered by a function, preferably cryptographically altered in order to check the integrity of the send back response. If the send back response is correct, the module 20, particularly the slave device 42, may set its own source-address that has been defined by the master device 41 and acknowledge to the master device 41. The source-addresses may be set with an ascending value depending on the order in which they were discovered by the master device 41. Therefore, also the discovery message may comprise a data field containing the incremented number and/or an target-address incremented with each new discovery, so that each module 20 knows the currently discovered amount of modules and/or the target of the discovery message. After the first discovery of the first module 20, the second discovery message may still be received by the first module 20, processed, but then forwarded, since the first module 20 knows its source-address and can compare it to the number or target-address, respectively, of the discovery message.

Also provided is a slave device 42 for a module 20 of a modular industrial robot 10, comprising means for responding to the discovery message from the master device 41 by receiving and responding to the discovery message via the communication network 40 to be discovered by the master device 41, and receiving and forwarding the discovery message to a following slave device 42 via the communication network 40 if already been discovered by the master device 41. The decision, if the slave device 42 has been already discovered, can e.g. be made by checking by the slave device 42, if an address has been already assigned to the slave device 42 by the master device 41 and/or if the assigned address equals a target-address in the discovery message.

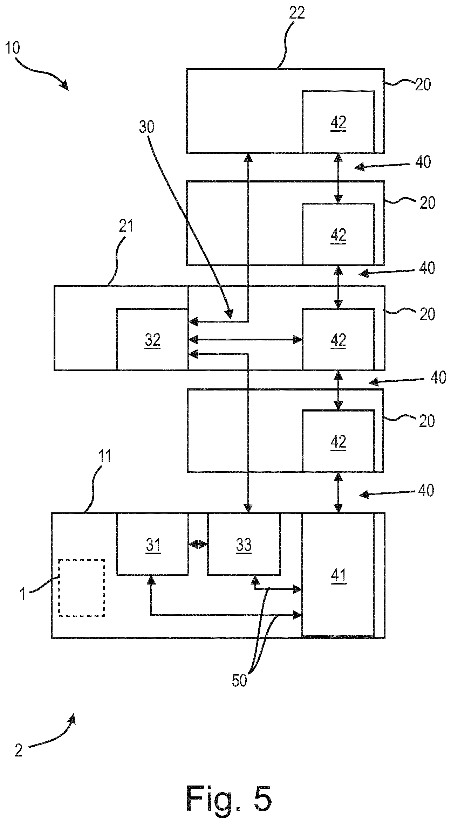

The master device 41 may be part of a control unit 11 of the modular robot 10 that is shown in Fig. 5. Each of the slave devices 42 may be part of a respective module 20. Also, additional slave devices 32 for an industrial communication network 30 may be integrated into each module 20. The control unit may be connected to the modules 20 via a wireless or physical data connection. Accordingly, it is possible that the control unit and the modules 20 are physically separated parts.

Referring back to Fig. 1, the method 200 for determining 110 an amount and order of modules 20 may comprise carrying out the steps of a method 100 for a configuration of a modular industrial robot 10 described as follows, wherein the number and/or addresses may be used as the module specification.

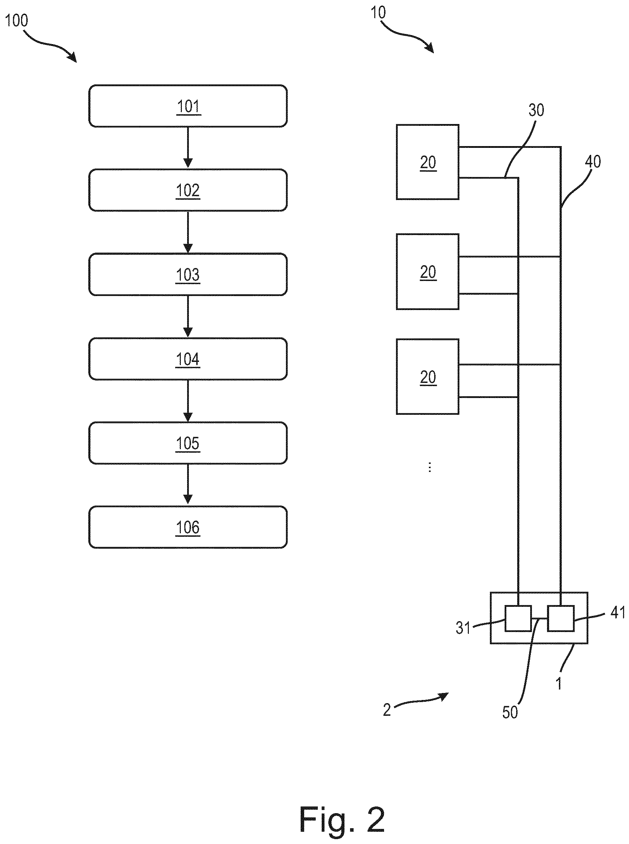

Fig. 2 shows a flowchart of a method 100, particularly computer-implemented method, for a configuration of a modular industrial robot 10 according to the invention. The modular industrial robot 10 can be modular in the sense that it can be composed of different modules 20 depending on the desired application. Therefore, the method may comprise obtaining 101 a module specification about a current structure of the robot 10. The module specification may be specific for a number and/or order and/or type of modules 20 of the robot 10. Furthermore, the module specification may be obtained dynamically and repeatedly to take into account the case that the number and/or order and/or type of modules changes, preferably using the previously described method 200.

The method 100 may further comprise configuring 102 identifiers like fieldbus addresses, particularly FSOE addresses, for the modules 20 using the module specification. This can mean that different addresses are assigned uniquely to the modules 20, one address for each module 20. Additionally, noting that e.g. FSOE uses EtherCAT, every module 20 may also receive a further address, like a EtherCAT-address. In this case, both addresses of each module 20 are linked.

The configured identifiers may be used for addressing the modules 20 via a industrial communication network 30 like FSOE. For example, in order to assign an identifier to each module, the modules are first identified using the module specification. Here, other conditions can also be checked, e.g. that only modules of a certain type are taken into account. Then, the identifiers can be assigned to the identified modules.

The method may further comprise a triggering 103 of responses of the modules 20 depending on the configured identifiers and particularly using the addressing of the modules 20 via the industrial communication network or another addressing via another network that is linked and therefore dependent on the addressing via a industrial communication network 30 (like the addressing via EtherCAT, if the industrial communication network 30 is FSOE). The triggering may be performed after each assignment of an identifier to a module. Furthermore, a receiving 104 of each of the responses via an additional communication network 40 may be performed. This allows identifying 105 each of the modules 20 from which the responses originate, wherein a module identity of a respective identified module 20 is assigned to the response originating from it. Finally, verifying 106 of the configured identifiers using the module identities can be performed. This allows to verify that the identifier was set on the right module. In other words, using the responses, the identity of the modules 20 assumed by the industrial communication network 30 can be verified by the additional communication network 40. Another advantage is that the solution according to the invention may allow the robot to be standard-compliant, e.g. redundantly constructed according to a certification like Safety integrity level SIL 3.

It is also shown in Fig. 2 that the step of configuring 102 may be carried out by a first master 31, the first master 31 may be used for controlling a communication with the modules 20 via the industrial communication network 30 using the identifiers for the addressing. Referring to Fig. 5, the first master 31 like a FSOE master can also be connected to another master like a Ether-CAT master 33. This allows to share structure and/or function of the industrial communication network 30. Fig. 2 and 5 also show a second master 41 which can be the master device 41 used for controlling a communication with the modules 20 via the additional communication network 40. A data connection 50 between the first master 31 and the second master 41 may be used for realizing the step of the verifying 106.

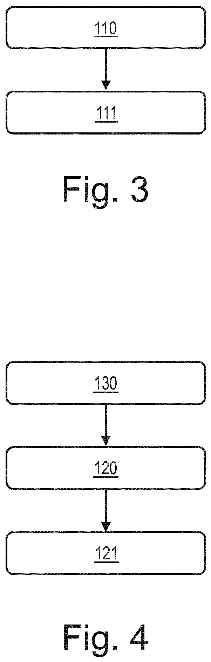

Referring to Fig. 3, the step of obtaining 101 the module specification may comprise determining 110 the module specification by the second master 41 using an identification procedure to identify the currently present modules 20 of the robot 10 via the additional communication network 40. The identification procedure may include the steps of a method 200 for determining 110 an amount and order of modules 20 according to the invention. The step of obtaining 101 the module specification may comprise transmitting 111 the determined module specification to the first master 31 via the data connection 50. This allows the second master to dynamically provide the module specification, thereby taking into account the case that the number and/or order and/or type of modules 20 changes. The identification procedure may utilize the three master devices 31, 33 and 41 as shown in Fig. 5. For example, as soon as the communication over EtherCAT is enabled, the second master 41 may allow to get the type ID and/or order of the modules 20. This module information may be pushed to the Ether-CAT master 33 to counter check the modules 20 known by the Ether-CAT master 33. This counter check may be also repeated every couple of seconds after the Ether-CAT communication has been established. The Ether-CAT master 33 may only control the communication of a part of the modules 20, for example only of the drive modules 20. Therefore, only the identifiers of the drive modules 20 may be counter checked using the verification according to the method 100. If the current state of the modules 20 is not known by the second master 20, for example after a modification of the module order and/or when first starting the robot 10, the identification procedure may be run and/or the configuration using the method 100 is carried out. After a successful verification, the module information may also be transmitted to the FSOE master 31 that can load the pre stored kinematic-matrices depending on the type ID into its local buffer. The matrix data together with the angle data transmitted via the industrial communication network 30 allows the FSOE master 31 to calculate the forwards kinematic necessary for a safe speed surveillance and virtual walls.

According to Fig. 4, the step of triggering 103 may comprise a storing 130 of an identity of each of the modules 20 for which the response was triggered. Additionally, the step of verifying 106 may comprise determining 120 the module identity of each of the identified modules 20 by the second master 41, wherein each module identity may be assigned to the response originating from it. Finally, a comparing 121 may be carried out, wherein the determined module identity is compared with the stored identity for each of the responses. To this end, the stored identity may be transmitted via the data connection 50 from the first master 31 to the second master 41, so that the second master 41 can carry out the comparison. The comparison allows to securely verify the correct assignment of the identifiers to the modules. If the determined module identity may be not equal to the stored identity, an error may be output for example to a user of the robot. Also, an error may lead to a cut of the power of at least some of the modules, particularly the drive modules.

In Fig. 5, the modular robot 10 is shown with more details according to an embodiment of the invention. The modules 20 may be of different types, such as a drive module 21 and a endpoint 22. The endpoint 22 may be used by the identification procedure to detect the last module 20 of the robot 10. The type of the module 20 may be provided by a type ID. The module specification may comprise the type ID assigned to each module identity and can therefore be specific for the type of each of the modules 20 of the robot 10. The module specification may therefore also be specific for the order of each of the modules 20 of the robot 10.

Also provided is a safety control system 2 for a modular industrial robot 10, as shown in Fig. 5. The system 2 may comprise a first master 31 for controlling a communication with at least two modules 20 of the robot 10 via a industrial communication network 30, and a second master 41 for controlling a communication with the modules 20 of the robot 10 via an additional communication network 40. The first master 31 may be configured to address the modules 20 via the industrial communication network 30 using identifiers of the modules 20. The second master 41 may be configured to receive responses via the additional communication network 40, wherein the responses may be triggered previously depending on the identifiers. Furthermore, the second master 41 may be configured to perform an identification of each of the modules 20 from which the respective response originates, wherein the first master 31 and the second master 41 may be in data connection 50 with each other for carrying out a verification of the identifiers using the identification.

Also provided is a modular industrial robot 10 for manufacturing shown in Fig. 5, comprising the safety control system 2 according to the invention. Furthermore, a data processing apparatus 1 may be provided comprising means for carrying out the method 100 according to the invention.

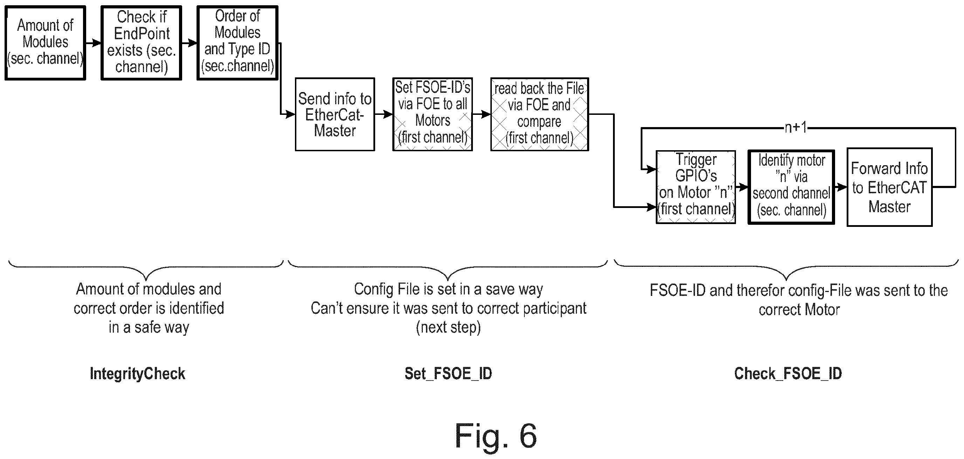

Fig. 6 to 12 show practical implementations of certain concepts in accordance with embodiments of the invention. Here, the first master 31 is exemplary configured as a FSOE master 31 and therefore cooperates with another EtherCAT master 33 using the industrial communication network 30. Accordingly, the industrial communication network 30 can be configured as a FSOE fieldbus, which uses structure and/or functions of an EtherCAT fieldbus. Each module 20 may comprise an EtherCAT and a FSOE slave 32 that are connected via the network 30 to the EtherCAT and FSOE master 31.

As described before, the communication via the industrial communication network 30 can be a FSOE-communication which allows to provide a more reliable communication and therefore a higher safety level. To this end, each module 20 may receive a system-wide unique FSOE address, also referred to as FSOE-ID. Those FSOE-IDs may be set via FoE using a base file, wherein the base file may only be altered to change FSOE-ID in the file and to set a checksum. To ensure the file was saved properly on a slave device 42, the file will be read back and counter checked with the originally pre-stored file. To ensure the file was stored only to the correct drive module 20, GPIO's may be triggered on the drive module 20 via the EtherCAT master 33 in a pre-defined way to trigger a message 61 in the additional communication network 40 and to inform the EtherCAT master 33 and FSOE master 31 that everything is set up correctly.

Due to the modular setup of the robot 10 three main challenges may be identified to ensure a safe FSOE connection and correct forward kinematics order: to get an amount of modules in a safe way, to get an order of modules in a safe way and to set system-wide unique FSOE-IDs.

Three important tasks may be provided for a secure communication with the modules 20. Firstly, an integrity check can be used to get the amount and order of the modules 20 ("IntegrityCheck"). Secondly, FSOE-IDs may be set via EtherCAT ("Set_FSOE_ID"). Thirdly, it may be checked if the FSOE-ID was set on the right slave device ("Check_FSOE_ID"). Those tasks can be broken down into smaller sub-tasks as shown in Fig. 6.

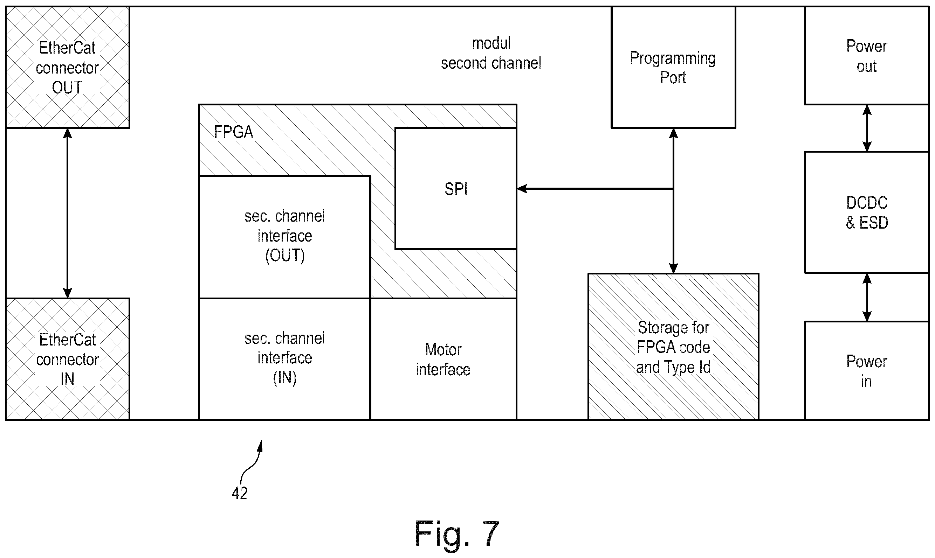

In Fig. 7, a schematic configuration of a module 20, particular a slave device 42 for the module 20, is shown. To power the slave circuit, a DCDC converter may be used to lower the +48V supply voltage to a usable voltage level. Furthermore, the +48V line may be ESD (Electrostatic Discharge) protected. The EtherCAT connection can be tunneled through without any interaction. The main computing unit may be an FPGA that can be SIL3/PLD certified, which can interface with the input and output of the additional communication network 40 on different pins. It can also be able to interface with the motor board of a drive module 20 via GPIO pins. The type ID may be stored along side with the program code, which can be flashed via an SPI interface to the slave 42 (note: the SPI or Serial Peripheral Interface is a common interface for this purpose, however, other interfaces may be used as well). Since the type ID is a safety critical information, the manufacturer may counter check the flashed bits on the storage. To counter the unlikely event of bit flips over time not only the type ID may be stored but also an encrypted variant.

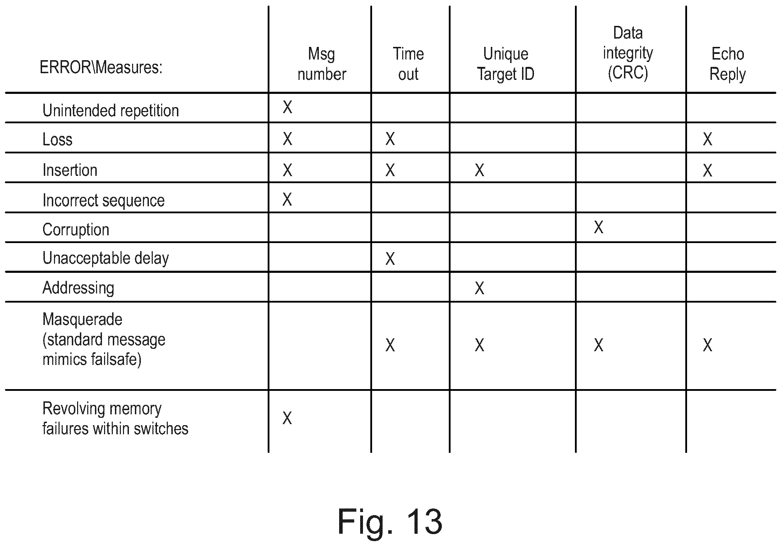

The described methods may be helpful to bring the additional communication network in compliance with the DIN EN IEC 61784-3 to ensure a safety level of PLD/SIL3. To this end, error and counter measurements may be provided as shown in the table in Fig. 13.

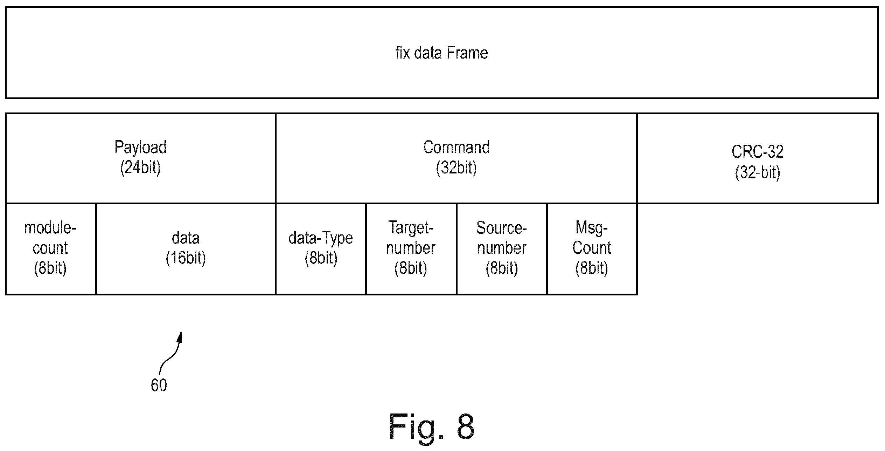

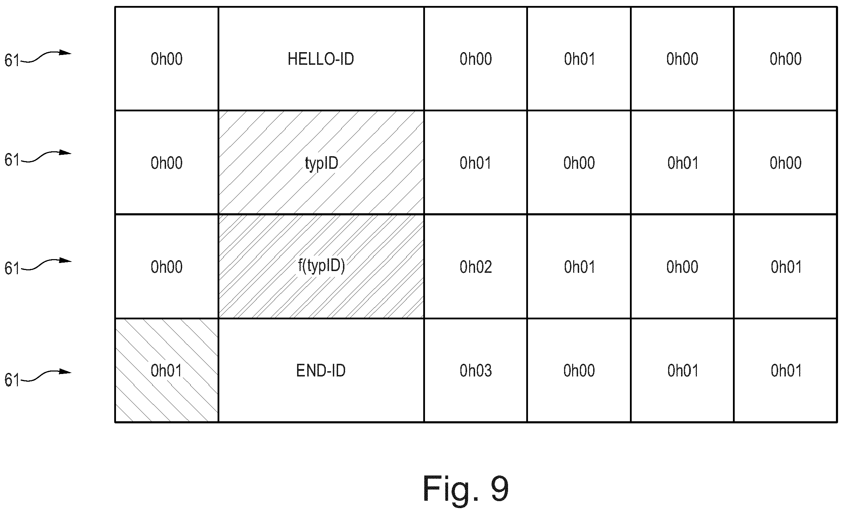

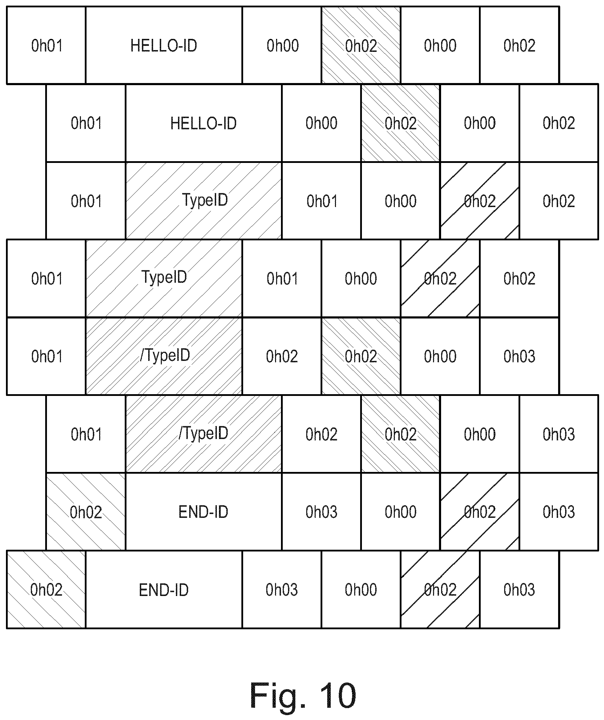

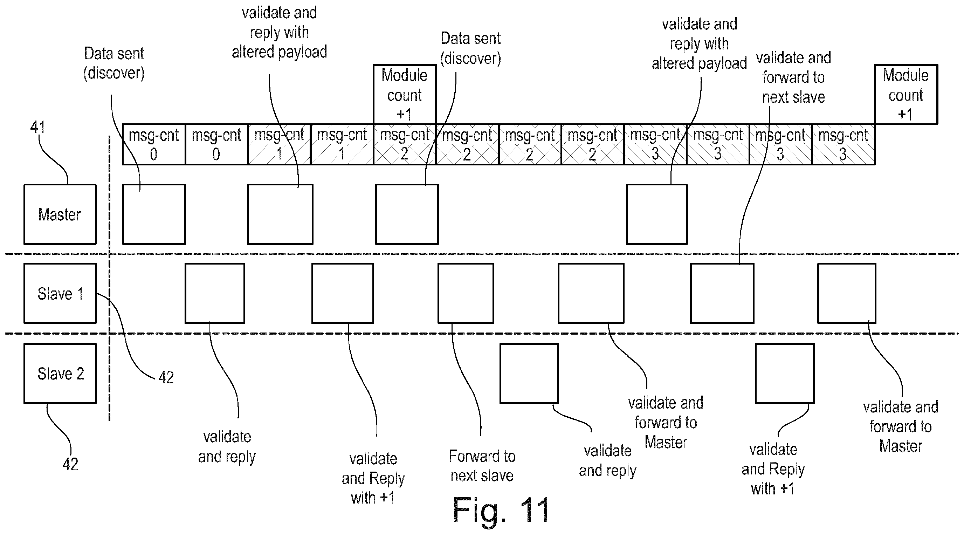

In Fig. 8, a possible data structure 60 used for the additional communication network 40 is shown. The data structure 60 may be used for a message 61 like a discovery message according to a method 200. To ensure the information is transferred correctly and implemented with the shown measurements in the table of Fig. 13, a CRC-32 (cyclic redundancy check) check value may be calculated from the payload plus command data, to ensure data integrity and detect corruption or masquerade. To address the issue of unintended repetition, the command part may have a 8bit message count that restarts from zero after reaching its maximum value. To counter an insertion error, the data structure 60 may also include an 8bit source-address (source-number) and 8bit destination address (destination-number). To enable a payload receiver to interpret the data, a prior command (data-type) needs to be sent which may be defined as 8bit. The actual payload may be 16bit long which is the size of an FSOE-ID followed by an 8bit module count that holds the current amount of identified modules, which enables the additional communication network 40 to discover new modules 20. This value may be target-number minus one during the discovery phase. For the initialization of the additional communication network 40, at the beginning of an initialization phase, a module 20 does not know its source-number. To still be able to have a unique target only point to point wire connections may be allowed, meaning there are only two communication participants. As shown in Fig. 9, first the second master 41 will sent a discover message 61 ('HELLO-ID') with zero known participants to its connected module. The first module in the chain can then reply with its type ID, that is pre-set by the manufacturer and waits till it receives its type ID altered by function f. If the type ID is correct and if there was no other error during communication, a first one of the second slaves 42 ("slave 1") may reply with "+1" and sets its own source-address (source-number) to "0x01" which will be acknowledged by sending and 'END-ID' command with an incremented module-count back to the second master (41). The same principle may apply for a second one of the second slaves 42 ("slave 2"). The second master 41 may sent its discovery token (HELLO-ID) with the target of 2 and module-count of 1 to the first one of the second slaves 42. Since the first one of the second slaves 42 was already discovered and knows its source-number it will forward the message 61 after checking for payload-errors to the second one of the second slaves as shown Fig. 10. The mentioned procedure may continue until the endpoint type ID is found and verified. Fig. 11 shows the procedure again on a higher abstraction level. Possible errors like that no endpoint could be found, time-out, e.g. due to wire breach, CRC-32 errors or wrong message numbering may lead to a triggering of a stop of the robot 10.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Embodiments of the invention may be implemented on a computer system. The computer system may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### LIST OF REFRENCE SIGNS

- 1: apparatus
- 2: system

- 10: robot
- 11: control unit

- 20: module
- 21: drive module
- 22: endpoint

- 30: fieldbus, industrial communication network
- 31: first master, FSOE master
- 32: first slave, FSOE slave
- 33: EtherCAT master

- 40: additional communication network
- 41: second master, master device
- 42: second slave, slave device

- 50: data connection
- 60: data structure
- 61: message
- 100: method
- 101: obtaining
- 102: configuring
- 103: triggering
- 104: receiving
- 105: identifying
- 106: verifying
- 110: determining
- 111: transmitting

- 120: determining
- 121: comparing
- 130: storing

- 200: method
- 201: transmitting
- 202: incrementing
- 203: transmitting
- 204: incrementing

## Claims

1. A method (100) for a configuration of a modular industrial robot (10), the method (100) comprising:
obtaining (101) a module specification about a current structure of the robot (10), the module specification being specific for a number of modules (20) of the robot (10);
configuring (102) identifiers for the modules (20) using the module specification, the identifiers being used for addressing the modules (20) via an industrial communication network (30);
triggering (103) responses of the modules (20) depending on the configured identifiers;
receiving (104) each of the responses via an additional communication network (40);
identifying (105) each of the modules (20) from which the responses originate, a module identity of a respective identified module (20) being assigned to the response originating from it; and
verifying (106) the configured identifiers using the module identities.

2. The method (100) of claim 1, wherein the step of configuring (102) is carried out by at least one first master (31), the first master (31) being used for controlling a communication with the modules (20) via the industrial communication network (30) using the identifiers for the addressing;
wherein the step of obtaining (101) the module specification comprises:
determining (110) the module specification by a second master (41) using an identification procedure to identify the currently present modules (20) of the robot (10) via the additional communication network (40), the second master (41) being used for controlling a communication with the modules (20) via the additional communication network (40); and
transmitting (111) the determined module specification to the first master (31) via a data connection (50) between the first master (31) and the second master (41); wherein particularly
the steps of receiving (104) and identifying (105) and preferably verifying (106) being carried out by the second master (41) and preferably the step of triggering (103) being carried out by the first master (31) or another master (33);
wherein preferably the step of triggering (103) comprises:
storing (130) an identity of each of the modules (20) for which the response was triggered;
wherein preferably the step of verifying (106) comprises:
determining (120) the module identity of each of the identified modules (20) by the second master (41), each module identity being assigned to the response originating from it; and
comparing (121) the determined module identity with the stored identity for each of the responses.

3. The method (100) of any one of the preceding claims, wherein the identifiers are configured in a way that the identifiers are uniquely assigned to the modules (20), the uniquely assigned identifiers being used to send commands and/or data to and/or from the modules (20) via the industrial communication network (30), particularly via a fieldbus (30), preferably EtherCAT and/or FSOE-EtherCAT, and/or
wherein the step of triggering (103) comprises:
initiating an activation of a GPIO of one of the modules (20) by transmitting a corresponding message to the module (20).

4. The method (100) of any one of the preceding claims, wherein the step of configuring (102) the identifiers comprises:
setting the identifiers for the modules (20) by providing a file for the modules (20), particularly via File over EtherCAT, the file being modified for each of the modules (20) to include the identifier;
saving the provided file after each modification to the respective module (20); and
verifying the correctness of each of the saved files by reading back the file and comparing the read back file with the originally provided file.

5. The method (100) of any one of the preceding claims, wherein after the triggering (103) of the response of one of the modules (20) the response is first received, then the identification of the module (20) from which the response originates is carried out, and then the configured identifier used for the triggering (103) of this response is verified based on the identification of the module (20) before the response of another one of the modules (20) is triggered.

6. The method (100) of any one of the preceding claims, the module specification being specific for the type of each of the modules (20) of the robot (10), wherein the method (100) further comprises:
selecting a part of the modules (20) depending on the type of each of the modules (20), particularly those modules (20) that comprise a motor and/or a sensor and/or an endeffector; wherein the response is only triggered for the selected modules (20); wherein preferably
the module specification being specific for the order of the modules (20) of the robot (10), wherein position data from each motor is transmitted via the industrial communication network (30), preferably a fieldbus (30), particularly via FSOE-EtherCAT (30), wherein a position of the robot (10) is determined using the position data and the module specification.

7. A method (200) for determining (110) an amount and order of modules (20) of a modular industrial robot (10), comprising:
transmitting (201) a discovery message by a master device (41) via a communication network (40) to discover a first module (20) of the modules (20), the discovered first module (20) responding to the discovery message;
incrementing (202) a number and setting an address of the discovered first module (20) depending on the response to the discovery message, the address being used for addressing the discovered module (20) via the communication network (40), the address further being specific for the order of the modules (20), and the number being specific for the amount of the modules (20);
transmitting (203) at least one further discovery message by the master device (41) via the communication network (40) to discover at least one further module (20) of the modules (20), each of the discovered at least one further modules (20) responding to the discovery message; and
incrementing (204) the number and setting at least one further address of the discovered at least one further module (20) depending on each response to the discovery message.

8. The method (200) of claim 7, further comprising:
carrying out the steps of the method (100) according to any one of claims 1-6, the number and/or addresses being used as the module specification.

9. A master device (41) comprising means for determining (110) an amount and order of modules (20) of a modular industrial robot (10) by:
transmitting (201) a discovery message via a communication network (40) to discover a first module (20) of the modules (20);
incrementing (202) a number and setting an address of the discovered first module (20) depending on a response of the discovered first module (20) to the discovery message, the address being used for addressing the discovered module (20) via the communication network (40), the address being specific for the order of the modules (20), and the number being specific for the amount of the modules (20);
transmitting (203) at least one further discovery message via the communication network (40) to discover at least one further module (20) of the modules (20); and
incrementing (204) the number and setting at least one further address of the discovered at least one further module (20) depending on each response of the discovered at least one further modules (20) to the discovery message.

10. A slave device (42) for a module (20) of a modular industrial robot (10), comprising means for responding to a discovery message from a master device (41) by:
receiving and responding to the discovery message via a communication network (40) for being discovered by the master device (41); and
receiving and forwarding the discovery message to a following slave device (42) via the communication network (40) if already been discovered by the master device (41);

11. A safety control system (2) for a modular industrial robot (10), the system (2) comprising:
a first master (31) for controlling a communication with at least two modules (20) of the robot (10) via a industrial communication network (30); and
a second master (41) for controlling a communication with the modules (20) of the robot (10) via an additional communication network (40);
wherein the first master (31) is configured to address the modules (20) via the industrial communication network (30) using identifiers of the modules (20);
wherein the second master (41) is configured to receive responses via the additional communication network (40), the responses being triggered previously depending on the identifiers;
wherein the second master (41) is further configured to perform an identification of each of the modules (20) from which the respective response originates;
wherein the first master (31) and the second master (41) are in data connection (50) with each other for carrying out a verification of the identifiers using the identification.

12. The safety control system (2) of claim 11, wherein the safety control system (2) is configured to carry out a method (100) according to any one of claims 1-8 and/or comprises a master device (41) according to claim 9 and/or comprises a slave device (42) according to claim 10.

13. A modular industrial robot (10) for manufacturing, comprising the safety control system (2) of any one of claims 11 or 12, wherein the modular robot (10) is used for an industrial application, the industrial application comprise at least one of the following: transportation, assembling, processing, welding, finishing, machine tending of materials and parts.

14. A data processing apparatus (1) comprising means for carrying out the method (100) of any one of claims 1-8.

15. A computer program comprising instructions which, when the program is executed by a computer, cause the computer to carry out the method (100) of any one of claims 1-8.
